# EUROPÄISCHE PATENTSCHRIFT

(11) **EP 1 114 324 B1**
(45) Veröffentlichungstag und Bekanntmachung des Hinweises auf die Patenterteilung: **05.03.2008**
(21) Anmeldenummer: 00954326.5
(22) Anmeldetag: 12.07.2000
(51) Int. Cl.: G01P 13/04

(54) **EINRICHTUNG ZUR ERKENNUNG DES RÜCKDREHENS EINES ROTIERENDEN TEILS EINER BRENNKRAFTMASCHINE**
DEVICE FOR DETECTING THE REVERSE ROTATION OF A ROTATING PART OF AN INTERNAL COMBUSTION ENGINE
DISPOSITIF SERVANT A RECONNAITRE L'INVERSION DU SENS DE ROTATION D'UNE PARTIE ROTATIVE D'UN MOTEUR A COMBUSTION INTERNE

(30) Priorität: 20.07.1999 DE 19933845
(43) Veröffentlichungstag der Anmeldung: 11.07.2001
(73) Patentinhaber: ROBERT BOSCH GMBH, 70442 Stuttgart (DE)
(72) Erfinder: RUPP, Ingolf, D-71636 Ludwigsburg (DE); LEHNER, Michael, D-75417 Muehlacker (DE)
(86) Internationale Anmeldenummer: PCT/DE2000/002268
(87) Internationale Veröffentlichungsnummer: WO 2001/006264

(56) Entgegenhaltungen:
- WO-A-96/30723
- DE-A- 4 232 864
- DE-A- 19 722 016
- DE-A- 19 750 304
- GB-A- 2 096 312
- GB-A- 2 132 750
- US-A- 4 314 153

## Beschreibung

Die Erfindung betrifft eine Einrichtung zur Erkennung des Rückdrehens eines rotierenden Teils einer Brennkraftmaschine nach der Gattung des Hauptanspruchs.

Bei mehrzylindrigen Brennkraftmaschinen mit elektronisch geregelter Einspritzung und Zündung wird im Steuergerät berechnet, wann und wieviel Kraftstoff in welchen Zylinder eingespritzt werden soll und wann gezündet wird. Damit diese Berechnungen in korrekter Weise erfolgen, muß die jeweilige Stellung der Kurbel- bzw. Nockenwelle der Brennkraftmaschine bekannt sein.

In der EP-PS 0 017 933 ist bspw. beschrieben, daß die Kurbel- bzw. die Nockenwelle mit einer Scheibe verbunden ist, auf deren Oberfläche_wenigstens eine Bezugsmarke als Lücke und zusätzlich eine Vielzahl gleichartiger Markierungen, auch Inkremente genannt, angebracht sind. Diese beiden drehenden Scheiben werden von passenden feststehenden Aufnehmern abgetastet. Aus der zeitlichen Abfolge der von den Aufnehmern gelieferten Impulsen wird im Steuergerät eine eindeutige Aussage über die Stellung von Kurbel- und Nockenwelle gewonnen, sodaß im Steuergerät entsprechende Ansteuersignale für die Einspritzung oder Zündung gebildet werden. Zur Sicherstellung, daß die korrekte Stellung der Kurbel- bzw. Nockenwelle vorliegt, muß nach dem Start der Brennkraftmaschine eine Synchronisation durchgeführt werden. Diese folgt ausgehend vom Erkennen der Bezugsmarke. Drehzahl und Winkelstellung von Kurbel- bzw. Nockenwelle müssen hochgenau erfaßt werden.

Aus dem Umstand, daß die Nockenwelle bei einem Arbeitsspiel eines Viertakters 360° KW und die Kurbelwelle im gleichen Zeitraum 720° KW zurücklegt und die Stellung beider Wellen über Bezugsmarken erfaßbar sind, läßt sich bestimmen, in welchem Arbeitstakt die Brennkraftmaschine sich befindet.Zur Drehzahlerfassung einer Kurbelwelle wird standardmäßig eine Geberscheibe mit 60-2 Zähnen eingesetzt, die von einem Aufnehmer abgetastet wird, induktiv, magnetoresistiv oder mittels des Hall-Effekts.

Um einen sicheren Betrieb der Brennkraftmaschine zu gewährleisten, muß sichergestellt werden, daß kein - Rückdrehen des Motors auftritt bzw. ein Rückdreher sicher erkannt wird. Ein Rückdrehen der Brennkraftmaschine kann z.B. durch eine falsche Zündwinkelausgabe beim Start, beim Abwürgen der Brennkraftmaschine oder durch Massekräfte bei einem Schleudern des Fahrzeugs auftreten.

Das Steuergerät erhält beim Rückdrehen weiterhin ein Rechtecksignal vom Drehzahlsensor, kann dabei aber nicht feststellen, daß es sich um Rückdrehen handelt. Wird ein Rückdrehen der Brennkraftmaschine nicht erkannt, so stimmt die Winkelbasis im Steuergerät nicht mehr mit der Motorposition überein oder es kann zu einer falschen Synchronisation kommen. Die Folge wären undefinierte Einspritzungen und Zündungen. Dieser unkontrollierte Zustand der Brennkraftmaschine birgt ein hohes Risiko für Zündungen bei offenem Einlaßventil und damit für Saugrohrpatscher.

Bei Saugrohrpatschern kann der Leerlaufsteller oder die Drosselklappe oder das Saugrohr evtl. auch der Druckmesser und Heißfilm-Luftmassenmesser (HFM) beschädigt werden.

Für Systeme mit Benzin-Direkt-Einspritzung ist eine Rückdreherkennung besonders wichtig, da der Kraftstoffeintrag in den Zylinder nicht mehr aufgrund einer mechanischen Kopplung, sondern aufgrund der Winkelbasis im Steuergerät erfolgt. Somit kann nicht nur die Zündung, sondern auch die Einspritzung in den Brennraum zu jedem beliebigen Zeitpunkt erfolgen. Wird das Einspritzventil im Start betätigt, wenn der Zylinder schon in der Kompression ist, so kann es u.U. nicht mehr geschlossen werden, da der Gegendruck zu hoch ist (Hochdruck im Rail ist noch nicht aufgebaut). Damit kann Luft in die Benzin-Hochdruck-Verteilung gelangen und das Ventil kann verkoken.

Um ausreichend Information über das aktuelle Arbeitsspiel der Brennkraftmaschine zu erhalten, muß zusätzlich zur Abfrage der Kurbelwellenstellung die absolute Nockenwellenstellung ermittelt werden. Ferner muß die Position der Nockenwelle für Systeme mit Nockenwellenverstellung erfaßt werden.

In modernen Systemen für die Steuerung der Brennkraftmaschine wird die Nockenwellenstellung sequentweise erfaßt. Für zukünftige Systeme zeigt sich das Erforderniss, die Nockenwellenstellung kontinuierlich mittels eines Absolutwinkelgebers zu ermitteln.

Zu Erfassung der Stellung der Nockenwellenstellung sind Absolutwinkelmesser bekannt, deren Ausgangssignal periodisch linear steigt oder fällt je nach Drehrichtungssinn der Nockenwelle, wobei die Periode 360° Nockenwellendrehung oder 720° Kurbelwellendrehung entspricht. Dadurch, daß das Ausgangssignal des Nockenwellen Absolutwinkelmessers linear steigt oder fällt, läßt sich für jede Drehposition der Nockenwelle ein zugehöriger Drehwinkel zuordnen bzw. angeben oder messen.

Aus der DE-PS 19722016 ist eine Anordnung zur berührungslosen Drehwinkelerfassung bekannt, insbesondere der Drehwinkelposition der Nockenwelle. Dabei werden bspw. zwei Sensorelemente, von denen eines nach dem Hall-Effekt arbeitet und das andere ein magnetoresitiver Aufnehmer ist, miteinander geometrisch gekoppelt und elektronisch über ein Netzwerk vernetzt und einem sich drehenden Magnetfeld ausgesetzt, dessen Rotation korrelliert mit der Drehung der Nockenwelle der Brennkraftmaschine. Auf diese Art und Weise ist ein Winkelmesser gebildet, der den Drehwinkel einer drehenden Welle wie z.B. der Nockenwelle als linear steigende Ausgangsspannung mit periodisch verlaufendem Sägezahn bei vorwärtsdrehender Kurbel- bzw. Nockenwelle ausgibt zur weiteren Verarbeitung.

Aus der GB 2 096 312 A ist zu entnehmen, durch drei Sensoren die Bewegungsrichtung eines Elements zu ermitteln. Dabei handelt es sich bei dem in der GB 2 096 312 A offenbarten Sensorsystem um keinen Absolutwinkelsensor.

Die DE 42 32 864 A1 zeigt eine Drehwinkel-, Drehzahl- und Drehrichtungsmessung mit einem Umlaufkodierer mit mindestens einem mit der Umlaufrichtung anwachsenden Abtastelement mit mindestens einem abrupten Übergang.

Die DE 197 50 304 A1 zeigt eine Drehrichtungserfassung mit einem Impulsrad, bei der das Impulsrad mit in einer Drehrichtung zunehmendem Tastverhältnis von Polpaar zu Polpaar ausgebildet ist. Die Drehrichtung wird dann aus der Zunahme bzw. fehlenden Zunahme des Tastverhältnisses bestimmt.

Der vorliegenden Erfindung liegt die Aufgabe zugrunde, ein Rückdrehen der Brennkraftmaschine über einen auf der Nockenwelle angeordneten Absolutwinkelgeber zuverlässig und innerhalb eines kleinen Drehwinkels zu erkennen.

Diese Aufgabe wird erfindungsgemäß durch den kennzeichnenden Teil des Hauptanspruchs gelöst.

Durch ein Abfragen des Absolutwinkels kann in vorteilhafter Weise zu bestimmten Zeitpunkten ermittelt werden, ob sich das Signal monoton fallend verhält um daraus Rückschlüsse auf Rückdreher zu ziehen. Durch die Art und Weise der Rückdreherkennung ist es nun möglich die Einspritz- und Zündausgabe zu sperren. Dadurch kann ein motorschädigender Betrieb vermieden werden.

Weitere vorteilhafte Ausgestaltungen der Erfindung ergeben sich aus den Unteransprüchen.

Ein Ausführungsbeispiel der Erfindung ist in den Figuren dargestellt.

Es zeigen:
- Fig. 1:: Ein Schema einer Steuereinrichtung für eine Brennkraftmaschine
- Fig. 2:: Das Ausgangssignal des Absolutwinkelgebers.

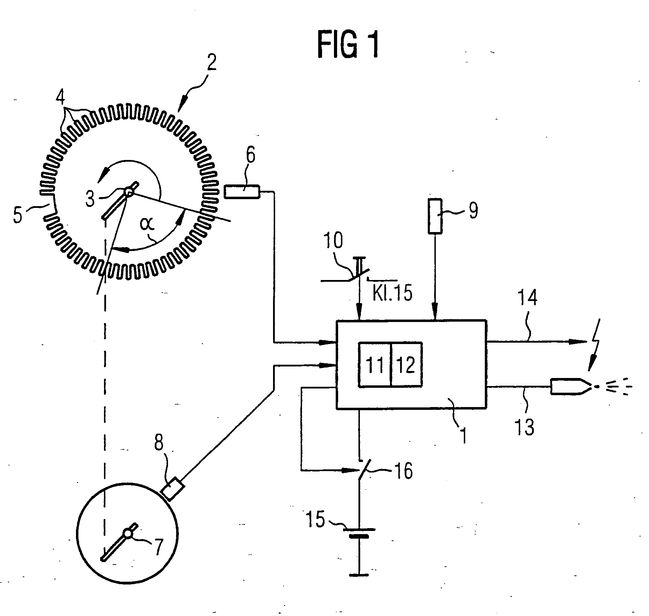

Die Steuerung bzw. Regelung der Brennkraftmaschine vorzugsweise mit Benzin-Direkt-Einspritzung übernimmt das Steuergerät 1 gemäß Fig. 1. Mit Bezugszeichen 2 ist die Geberscheibe bezeichnet, die starr mit der Kurbelwelle 3 der Brennkraftmaschine verbunden ist und an ihrem Umfang eine Vielzahl gleichartiger Winkelmarken aufweist. Neben diesen gleichartigen Winkelmarken 4 ist eine Bezugsmarke 5 vorhanden, die bspw. durch zwei fehlende Winkelmarken realisiert ist. Die Geberscheibe 2 wird vom Aufnehmer 6, bspw. einem induktiven Aufnehmer oder einem Hall-Sensor oder einem magnetoresistiven Sensor abgetastet. Die beim Vorbeilaufen der Winkelmarken 4 im Aufnehmer 6 erzeugten Signale werden im Steuergerät 1 in geeigneter Weise aufbereitet. Mit dem Bezugszeichen 7 ist die Nockenwelle gekennzeichnet, deren Drehwinkel über den Absolutwinkelmesser 8 erfaßt wird und dieses Ausgangssignal ist dem Steuergerät 1 zugeführt.

Das Steuergerät 1 erhält über weitere Eingänge für die Steuerung bzw. Regelung der Brennkraftmaschine erforderliche Eingangsgrößen, die von verschiedenen Sensoren gemessen werden. In Fig. 1 sind diese Sensoren mit 9 bezeichnet. Über einen weiteren Eingang wird ein "Zündung ein" - Signal zugeführt, das beim Schließen des Zündschalters 10 von der Klemme 15 des Zündschlosses geliefert wird und dem Steuergerät 1 die Inbetriebnahme der Brennkraftmaschine anzeigt. Das Steuergerät 1 umfaßt wenigstens eine zentrale Prozessoreinheit 11 mit Arithmetisch-Logischer-Einheit, sowie Speicher 12 und Register bzw. Schieberegister.

Im Steuergerät 1 werden Signale für die Einspritzung und Zündung für nicht näher bezeichnete Komponenten der Brennkraftmaschine ermittelt. Diese Signale werden über die Ausgänge 13,14 des Steuergeräts 1 abgegeben.

Die Spannungsversorgung des Steuergeräts 1 erfolgt in üblicher Weise mit Hilfe der Batterie 15, die über den Schalter 16 während des Betriebs der Brennkraftmaschine, sowie einer vom Steuergerät 1 selbst gesteuerten Nachlaufphase der Brennkraftmaschine mit dem Steuergerät 1 in Verbindung steht. In der Nachlaufphase werden die nach dem Abstellen der Brennkraftmaschine noch ermittelten Informationen abgespeichert. Sie stehen dann beim Wiedereinschalten der Brennkraftmaschine dem Steuergerät 1 sofort zur Verfügung. Diese Informationen umfassen insbesondere die letzten Winkelstellungen der Kurbel- bzw. Nockenwelle 3, 7, sowie Informationen der letzten Phasenlage.

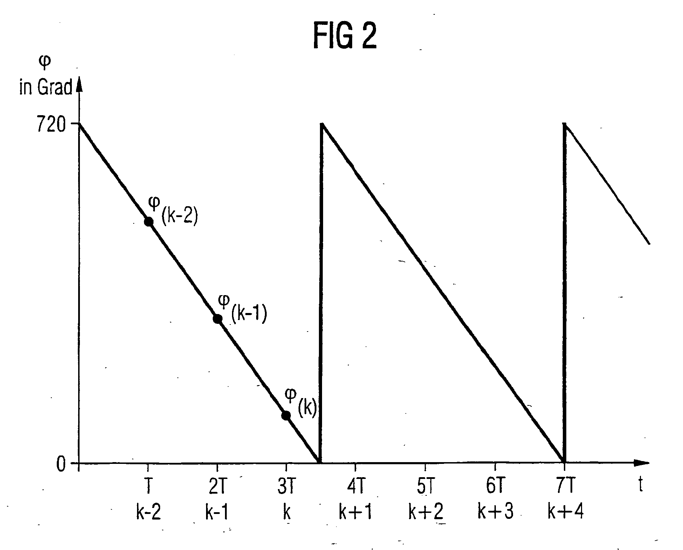

Die Fig. 2 zeigt das Signal des Absolutwinkelgebers 8 das in der vorgestellten Auswertefunktion ein stetiges Signal ist über ein Arbeitsspiel (720° KW) oder aber auch über eine Kurbelwellenumdrehung (360° KW). Dabei wird in bestimmten Zeitabständen der absolute Winkelwert des Gebers im Steuergerät 1 in einem Schieberegister abgespeichert. Für drei aufeinanderfolgende Werte ergibt sich somit die Reihenfolge: ϕ(k-2), ϕ(k-1), ϕ(k).

Das Schieberegister muß dabei mindestens eine Tiefe von drei Werten aufweisen. Bei jedem Eintrag werden die Werte im Schieberegister miteinander verglichen. Dies geschieht erfindungsgemäß nach dem folgenden Algorithmus: ϕ(k) < ϕ(k-1) < ϕ(k-2) Die Erfüllung dieser Bedingung weist darauf hin, daß ein Rückdrehen vorliegt. Wird diese Bedingung nicht erfüllt, wird nicht auf ein Rückdrehen der Brennkraftmaschine geschlossen.

Die Zeitabstände für die Abfrage der Werte ϕ(k) müssen dabei so gewählt werden, daß der Zeitraum für die Abfrage von drei Winkelwerten nicht länger ist, als die Zeit von einer Unstetigkeitsstelle bis zur nächsten. Liegen alle drei Meßwerte innerhalb des monotonen Bereichs, so ist eine eindeutige Aussage möglich, ob ein Rückdrehen stattfindet. Liegen die Meßpunkte beidseitig um eine Unstetigkeitsstelle, so wird zu diesem Zeitpunkt das Rückdrehen nicht erkannt. Der Algorithmus stellt dadurch sicher, daß im Normalbetrieb an den Unstetigkeitsstelle nicht fälschlicherweise ein Rückdrehen erkannt wird. Um die Abtastzeit nicht extrem klein wählen zu müssen, ist es sinnvoll die Rückdreherkennung nur unterhalb einer bestimmten Drehzahlschwelle durchzuführen.

Um bei extrem kleinen Drehzahlen nicht aufgrund des festen Zeitrasters fälschlicherweise ein Rückdrehen zu erkennen, muß zusätzlich überprüft werden, ob ein bestimmter Mindestwinkel zwischen den Abtastzeitpunkten liegt. Dies kann durch folgenden Algorithmus geschehen: /ϕ(k) - ϕ(k-2) / > ε, wobei ε ein Mindestwinkel ist.

### Bezugszeichenliste

- 1: Steuergerät
- 2: Geberscheibe
- 3: Kurbelwelle
- 4: Winkelmarken
- 5: Bezugsmarke
- 6: Aufnehmer
- 7: Nockenwelle
- 8: Absolutwinkelmesser
- 9: Sensor
- 10: Schalter Zündschloß
- 11: Zentrale Prozessoreinheit
- 12: Speicher
- 13: Ausgang
- 14: Ausgang
- 15: Batterie
- 16: Schalter

## Patentansprüche

1. Einrichtung zur Erkennung des Rückdrehens eines rotierenden Teils einer Brennkraftmaschine mit einer Kurbelwelle (3), deren Rotation über einen Aufnehmer (6) und eine mit der Kurbelwelle (3) verbundene Geberscheibe (2) mit einer Bezugsmarke (5) und einer Vielzahl gleichartiger Winkelmarken (4) vom Aufnehmer (6) als Impulse an ein Steuergerät (1) abgegeben werden, einer Nockenwelle (7), deren Rotation über einen Absolutwinkelgeber (8) erfasst wird, wobei das Ausgangssignal des Absolutwinkelgebers (8) innerhalb einer Periode von 360° Nockenwellendrehung oder 720° Kurbelwellendrehung mit Rückdrehung stetig fällt oder ohne Rückdrehung stetig steigt oder umgekehrt ϕ(k)< ϕ(k-1)< ϕ(k-2), bzw. im umgekehrten Fall ϕ(k)> ϕ(k-1)> ϕ(k-2) je nach Drehrichtungssinn und das Ausgangssignal des Absolutwinkelgebers (8) dem Steuergerät (1) zur Verarbeitung augeführt ist,
**dadurch gekennzeichnet,**
- **dass** die Einrichtung derart ausgebildet ist, dass zur Erkennung von Rückdrehern der Brennkraftmaschine drei aufeinanderfolgende Winkelwerte ϕ(k), ϕ(k-1), ϕ(k-2) aus dem Ausgangssignal des Absolutwinkelgebers (8) herausgetastet und in einem Algorithmus miteinander verglichen werden, derart, dass im Inversbetrieb mit Rückdrehern gilt: ϕ(k)< ϕ(k-1)< ϕ(k-2) und dass, wenn diese Bedingung nicht erfüllt ist, nicht auf Rückdreher geschlossen werden kann, und
- **dass** bei im Vergleich mit der Abtastung niedrigen Drehzahlen durch einen weiteren Algorithmus geprüft wird, ob ein bestimmter Mindestwinkel zwischen den Abtastzeitpunkten liegt, wobei der Algorithmus lautet [ϕ (k) - ϕ(k-2)] >ε und nur bei Erfüllung dieser Bedingung ein Rückdrehen detektiert wird.

2. Einrichtung nach Anspruch 1, **dadurch gekennzeichnet, dass** die abgetasteten Winkelwerte ϕ(k), ϕ(k-1), ϕ(k-2) in ein Schieberegister der Zentralen Prozessor Einheit (CPU) des Steuergeräts (1) mit der Mindesttiefe von drei Werten eingelesen und nach dem Algorithmus ϕ(k) < ϕ(k-1) < ϕ(k-2) miteinander in der Arithmetisch-Logischen-Einheit (ALU) verglichen werden.

3. Einrichtung nach Anspruch 1 oder 2, **dadurch gekennzeichnet, dass** die Abtastintervalle gleich groß sind.

4. Einrichtung nach Anspruch 1 bis 3, **dadurch gekennzeichnet, dass** die Zeitabstände für die Abtastung der Winkelwerte ϕ(k) so gewählt sind, dass der Zeitraum für die Abtastung von drei aufeinanderfolgenden Winkelwerten nicht länger ist als die Zeit von einer Unstetigkeitsstelle bis zur nächsten.

5. Einrichtung nach Anspruch 1 bis 4, **dadurch gekennzeichnet, dass** bei Erkennen von Rückdrehern im Steuergerät die Ansteuerung von Einspritzung und Zündung für eine definierte Zeit ausgesetzt werden.

## Claims

1. Device for detecting the reverse rotation of a rotating part of an internal combustion engine having a crankshaft (3) whose rotation is output via a pickup (6) and a signal transmitter disc (2) connected to the crankshaft (3) and having a reference mark (5) and a plurality of angular marks (4) of the same type as pulses to a control unit (1) by the pickup (6), a camshaft (7) whose rotation is sensed by means of an absolute angle signal generator (8), wherein the output signal of the absolute angle signal generator (8) continuously drops with reverse rotation within a period of 360° camshaft rotation or 720° crankshaft rotation or continuously rises without reverse rotation, or vice versa ϕ(k)<ϕ(k-1)<ϕ(k-2), or in the opposite case ϕ(k)>ϕk-1)>ϕ(k-2) depending on the direction of rotation, and the output signal of the absolute angle signal transmitter (8) is fed to the control unit (1) for processing,
**characterized**
- **in that** the device is embodied in such a way that in order to detect parts of the internal combustion engine which are rotating in reverse three successive angular values ϕ(k), ϕ(k-1), ϕ(k-2) are blanked out of the output signal of the absolute angle signal generator (8) and are compared with one another in an algorithm in such a way that in the inverse operating mode with parts rotating in reverse, the following applies: ϕ(k) <ϕ (k-1) <ϕ (k-2), and that if this condition is not met, it is not possible to conclude that parts rotating in reverse are present, and
- **in that** in the case of low rotational speeds compared to the sampling a further algorithm is used to check whether a specific minimum angle is present between the sampling times, wherein the algorithm is [ϕ(k) - ϕ(k-2)]>ε and reverse rotation is detected only when this condition is met.

2. Device according to Claim 1, **characterized in that** the sampled angle values ϕ(k), ϕ(k-1), ϕ(k-2) are read into a shift register of the central processing unit (CPU) of the control unit (1) with the minimum depth of three values, and are compared with one another in the arithmetic logic unit (ALU) in accordance with the algorithm ϕ(k) <ϕ (k-1) <ϕ (k-2).

3. Device according to Claim 1 or 2, **characterized in that** the sampling intervals are of equal magnitude.

4. Device according to Claims 1 to 3, **characterized in that** the time intervals for the sampling of the angle values ϕ(k) are selected such that the time period for the sampling of three successive angle values is not longer than the time from one transient to the next.

5. Device according to Claims 1 to 4, **characterized in that** when parts rotating in reverse are detected in the control unit, the actuation of the injection and ignition is suspended for a defined time.

## Revendications

1. Installation pour détecter l'inversion du sens de rotation d'une pièce rotative d'un moteur à combustion interne à vilebrequin (3), dont la rotation est transmise par un capteur (6) et un disque phonique (2) relié au vilebrequin (3) comportant un repère de référence (5) et un grand nombre de repères angulaires (4) de même nature, par le capteur (6) sous la forme d'impulsions fournies à un appareil de commande (1), l'arbre à came (7) dont la rotation est détectée par un capteur d'angle absolu (8), le signal de sortie du capteur d'angle absolu diminuant de manière continue sur une période de 360° d'angle de rotation de l'arbre à came ou de 720° d'angle de rotation du vilebrequin, en cas de rotation dans le sens inverse ou augmente de façon continue en l'absence de rotation en sens inverse et réciproquement *ϕ*(*k*)<*ϕ*(*k*-1)*<ϕ*(*k*-2), ou dans le cas inverse *ϕ*(*k*)>*ϕ*(*k*-1)>*ϕ*(*k*-2), selon le sens de rotation et le signal de sortie du capteur de l'angle absolu (8) est appliqué à l'appareil de commande (1) pour être traité,
**caractérisée en ce que**
- l'installation est réalisée pour séparer du signal de sortie du capteur d'angle absolu (8), les trois valeurs angulaires successives *ϕ*(*k*), *ϕ*(*k*-1), *ϕ*(*k*-2) pour détecter la rotation en sens inverse du moteur à combustion interne, et pour les comparer à l'aide d'un algorithme **en ce qu'**en mode de rotation en sens inverse, la relation *ϕ*(*k*)<*ϕ*(*k*-1)<*ϕ*(*k*-2) est vérifiée et si cette relation n'est pas satisfaite, on peut conclure qu'il n'y a pas rotation en sens inverse et
- en comparant avec la détection des vitesses de rotation basses, on vérifie par un autre algorithme, si un certain angle minimum se situe entre les instants de détection, l'algorithme étant défini comme suit [*ϕ*(*k*)-*ϕ*(*k*-2)]>ε et on conclut que la rotation est en sens inverse seulement si cette condition est remplie.

2. Installation selon la revendication 1,
**caractérisée en ce que**
les valeurs angulaires détectées *ϕ*(*k*),*ϕ*(*k*-1),*ϕ*(*k*-2) sont enregistrées dans un registre à décalage du processeur central (CPU) de l'appareil de commande (1) avec une profondeur minimale de trois valeurs et on les compare entre elles selon l'algorithme *ϕ*(*k*)<*ϕ*(*k*-1)<*ϕ*(*k*-2) dans l'unité arithmétique et logique (ALU).

3. Installation selon la revendication 1 ou 2,
**caractérisée en ce que**
les intervalles de détection sont de mêmes dimensions.

4. Installation selon les revendications 1 à 3,
**caractérisée en ce que**
les intervalles de détection des valeurs angulaire *ϕ*(*k*) sont choisis pour que la période de la détection de trois valeurs angulaires successives ne soit pas plus longue que le temps compris entre un point de discontinuité et le point suivant.

5. Installation selon les revendications 1 à 4,
**caractérisée en ce qu'**
en cas de détection de rotation en sens inverse dans l'appareil de commande, on neutralise la commande de l'injection et de l'allumage pendant une durée définie.
